# EUROPÄISCHE PATENTSCHRIFT

(11) **EP 2 074 877 B1**
(45) Veröffentlichungstag und Bekanntmachung des Hinweises auf die Patenterteilung: **14.03.2012**
(21) Anmeldenummer: 08021899.3
(22) Anmeldetag: 17.12.2008
(51) Int. Cl.: A01B 59/042, A01B 59/04

(54) **Anhängerkupplung für ein Fahrzeug, insbesondere einen Ackerschlepper**
Trailer coupling for a vehicle, in particular an agricultural tractor
Attelage de véhicule, en particulier tracteur agricole

(30) Priorität: 24.12.2007 DE 202007018030 U
(43) Veröffentlichungstag der Anmeldung: 01.07.2009
(73) Patentinhaber: Sauermann, Hans, 86558 Freinhausen (DE)
(72) Erfinder: Sauermann, Hans, 86558 Freinhausen (DE)
(74) Vertreter: Witzany, Manfred

(56) Entgegenhaltungen:
- EP-A- 1 913 804
- DE-A1- 1 480 701
- DE-U1- 29 824 333
- GB-A- 1 345 472

## Beschreibung

Die Erfindung betrifft eine Anhängerkupplung für ein Fahrzeug, insbesondere für einen Ackerschlepper gemäß dem Oberbegriff des Patentanspruchs 1.

Aus der DE 298 24 333 U1 ist eine Anhängerkupplung für einen Ackerschlepper bekannt, der ein heckseitiges Getriebegehäuse aufweist. An diesem Getriebegehäuse ist heckseitig ein Anhängebock gehalten, der ein Kupplungsglied höhenverstellbar trägt. Diese Anhängerkupplung hat sich in der Praxis gut bewährt und bildet den Ausgangspunkt der vorliegenden Erfindung.

Der Erfindung liegt die Aufgabe zugrunde, eine Anhängerkupplung der eingangs genannten Art zu schaffen, die sich durch eine erhöhte Belastbarkeit auszeichnet.

Diese Aufgabe wird erfindungsgemäß mit den Merkmalen des Patentanspruchs 1 gelöst.

Die Anhängerkupplung gemäß Anspruch 1 dient für ein Fahrzeug, insbesondere für einen Ackerschlepper mit einem heckseitigen Getriebegehäuse. An diesem Getriebegehäuse ist heckseitig ein Anhängebock befestigt, der üblicherweise zum Halten eines Kupplungsgliedes dient. Um das Fahrzeug universeller nutzen zu können, ist unterseitig am Getriebegehäuse ein Lager eines Drehbolzens für ein Zugpendel festgelegt. Auf diese Weise können verschiedene Kupplungssysteme genutzt werden. Die Kräfte, die mit diesen beiden Kupplungssystemen beherrscht werden können, sind jedoch jeweils durch die Festigkeit des Getriebegehäuses beschränkt. Zur Erhöhung der Belastbarkeit der Anhängerkupplung wird das Lager des Drehbolzens des Zugpendels mit dem Anhängebock mit einem zusätzlichen Verbindungsteil kraft- bzw. formschlüssig verbunden. Dieses zusätzliche Verbindungsteil überträgt Schub- und Zugkräfte von der Heckseite des Getriebegehäuses zu dessen Boden und umgekehrt. Damit werden alle Kräfte, die auf ein Kupplungsglied einwirken, auf zwei Seiten des Getriebegehäuses verteilt, unabhängig davon, ob ein Anhänger am Anhängbock oder am Zugpendel angekoppelt wird. Durch diese Kraftverteilung ergibt sich eine höhere Belastbarkeit des Getriebegehäuses, so daß entsprechend größere Stützlasten von der Anhängerkupplung bewältigt werden können.

Grundsätzlich könnte das Verbindungsteil als Flachblech ausgebildet sein, wenn ein korrespondierender Flansch des Anhängebockes mit dem Boden des Getriebegehäuses fluchtet. Zur Erzielung einer universelleren Anwendbarkeit ist es jedoch gemäß Anspruch 2 vorteilhaft, wenn das Verbindungsteil mindestens zwei Schenkel aufweist, die winkelig zueinander ausgerichtet sind. Für den Winkel zwischen beiden Schenkeln hat sich ein annähernd rechter Winkel als vorteilhaft herausgestellt, da in diesem Fall die frontseitige Fläche des Anhängebockes direkt zum Festlegen des entsprechenden Schenkel des verbindungsteils genutzt werden kann. Dabei bildet der Schenkel des Verbindungsteils eine Art unterseitige Verlängerung der Heckseite des Getriebegehäuses und verbessert auf diese Weise die Anbindung des Anhängebockes an das Getriebegehäuse.

Gemäß Anspruch 3 ist es vorteilhaft, wenn einer der Schenkel in etwa horizontal und der andere in etwa vertikal verläuft. Auf diese Weise ergibt sich eine optimale Krafteinbringung in den Schenkel, so daß das Getriebegehäuse gegenüber allen auftretenden Zug-, Schub- und Stützkräften geschützt ist.

Beim Auftreten von Schub- und Zugkräften wirken auf das Verbindungsteil erhebliche Biegekräfte, die ungünstig für die Formstabilität sind. Aus diesem Grund ist es gemäß Anspruch 4 günstig, zwischen den Schenkeln des Verbindungsteils einen die Biegesteifigkeit erhöhenden Verbindungssteg vorzusehen. Dieser Verbindungssteg verläuft vorzugsweise senkrecht zur Winkelhalbierenden der beiden Schenkel. Vorzugsweise ist der Verbindungssteg mit beiden Schenkeln verschweißt, um eine möglichst hohe Versteifungswirkung zu ergeben.

Schließlich ist es gemäß Anspruch 5 vorteilhaft, wenn das Verbindungsteil über Schraubbolzen mit dem Getriebegehäuse bzw. mit dem Anhängebock verbunden ist. Dies erleichtert die Montage des Anhängebockes am Getriebegehäuse.

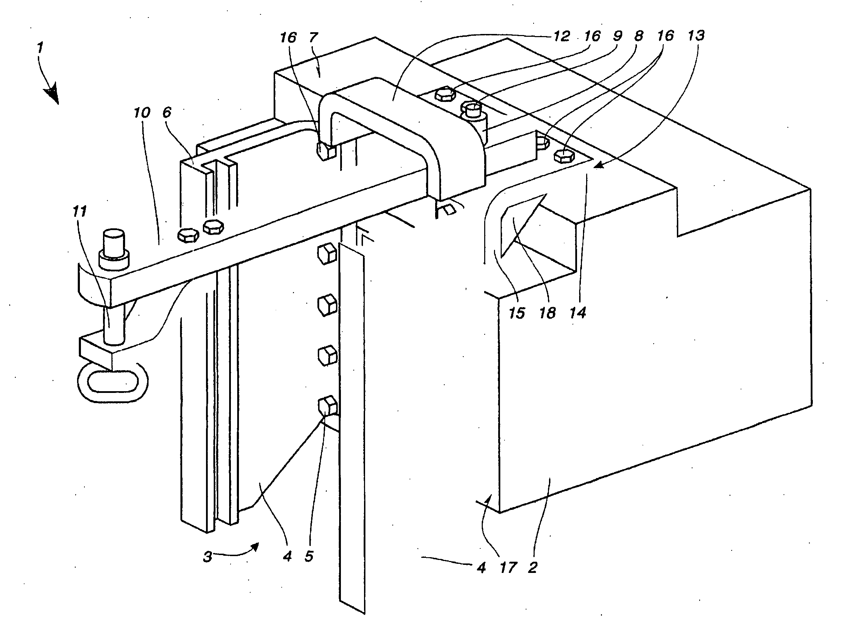

Der Erfindungsgegenstand wird beispielhaft anhand der Zeichnung erläutert, ohne den Schutzumfang zu beschränken.

Die einzige Figur zeigt eine räumliche Darstellung des Heckbereichs eines Ackerschleppers von unten. Dabei sind nur jene Teile dargestellt, die für das Verständnis des Erfindungsgegenstandes von Bedeutung sind.

Der Ackerschlepper 1 weist ein Getriebegehäuse 2 auf, dessen Getriebe einerseits mit einem nicht dargestellten Motor und andererseits mit nicht dargestellten Antriebsrädern in Wirkverbindung steht. An diesem Getriebegehäuse 2 ist heckseitig ein Anhängebock 3, bestehend aus zwei Wangen 4, festgelegt. Zur Verbindung des Anhängebockes 3 mit dem Getriebegehäuse 2 sind Schraubbolzen 5 vorgesehen, die in entsprechende heckseitige Gewindebohrungen des Getriebegehäuses 2 eingreifen. Der Anhängebock 3 weist Führungsschienen 6 auf, in denen eine nicht dargestellte Tragplatte höhenverstellbar gehalten ist, welche ein Kupplungsglied trägt.

An einem Boden 7 des Getriebegehäuses 2 ist ein Lager 8 eines Drehbolzens 9 gehalten. Dieser Drehbolzen 9 stützt ein Zugpendel 10 verschwenkbar am Getriebegehäuse 2 ab. Dieses Zugpendel 10 weist ein weiteres Kupplungsglied 11 auf, das die Verbindung mit einer Zugdeichsel eines Anhängers ermöglicht. Dem Zugpendel 10 ist außerdem eine Pendelleiste 12 zugeordnet, die insbesondere Kräfte aufnimmt, die von hohen Anhängerstützlasten herrühren.

Um sowohl mit dem Anhängebock 3 als auch mit dem Zugpendel 10 hohe Stützlasten bewältigen zu können, ist das Lager 8 mit dem Anhängebock 3 über ein Verbindungsteil 13 verbunden. Dieses Verbindungsteil 13 ist winkelförmig ausgebildet und weist einen horizontalen Schenkel 14 und einen vertikalen Schenkel 15 auf. Der horizontale Schenkel 14 ist mit dem Boden 7 des Getriebegehäuses 2 verbunden, während der vertikale Schenkel 15 mit dem Anhängebock 3 verbunden ist. Hierbei werden jeweils Schraubbolzen 16 genutzt. Durch diese Verbindung werden Kräfte einerseits vom Anhängebock 3 teilweise in den Boden 7 des Getriebegehäuses 2 eingeleitet. Andererseits werden beim Betrieb mit dem Zugpendel 10 auch Kräfte des Zugpendels 10 in eine Heckwand 17 des Getriebegehäuses 2 eingeleitet. Auf diese Weise werden die auftretenden Schub-, Zug- und Stützkräfte gleichmäßig auf das Getriebegehäuse 2 verteilt. Dies erlaubt eine beträchtliche Vergrößerung der bewältigbaren Stützlasten.

Da das Verbindungsteil 13 von den Schub- und Zugkräften auf Biegung belastet ist, ist zwischen den Schenkeln 14, 15 ein Verbindungssteg 18 vorgesehen, der mit beiden Schenkeln 14, 15 einen Winkel von 45° einschließt. Dieser Verbindungssteg 18 führt zu einer zusätzlichen Versteifung des Verbindungsteils 13 und damit zu einem verbesserten Kraftausgleich am Getriebegehäuse 2.

### Bezugszeichenliste

- 1: Ackerschlepper
- 2: Getriebegehäuse
- 3: Anhängebock
- 4: Wange
- 5: Schraubbolzen
- 6: Führungsschiene
- 7: Boden
- 8: Lager
- 9: Drehbolzen
- 10: Zugpendel
- 11: Kupplungsglied
- 12: Pendelleiste
- 13: Verbindungsteil
- 14: horizontaler Schenkel
- 15: vertikaler Schenkel
- 16: Schraubbolzen
- 17: Heckwand
- 18: Verbindungssteg

## Patentansprüche

1. Anhängerkupplung für ein Fahrzeug, insbesondere einen Ackerschlepper (1) mit heckseitigem Getriebegehäuse (2), wobei die Anhängerkupplung einen Anhängebock (3) aufweist, der heckseitig am Getriebegehäuse (2) festgelegt ist, und die Anhängerkupplung ein Zugpendel (10) mit einem Drehbolzen (9) aufweist, dessen Lager (8) unterseitig am Getriebegehäuse (2) festgelegt ist, **dadurch gekennzeichnet, daß** die Anhängerkupplung ein zusätzliches Verbindungsteil (13) aufweist, durch das das Lager (8) mit dem Anhängebock (3) kraft- und/oder formschlüssig verbunden ist.

2. Anhängerkupplung nach Anspruch 1, **dadurch gekennzeichnet, daß** das Verbindungsteil (13) mindestens zwei Schenkel (14, 15) aufweist, die winkelig zueinander angestellt sind.

3. Anhängerkupplung nach Anspruch 2, **dadurch gekennzeichnet, daß** einer der Schenkel (14) in etwa horizontal und der andere (15) in etwa vertikal verläuft.

4. Anhängerkupplung nach Anspruch 2 oder 3, **dadurch gekennzeichnet, daß** zwischen den Schenkeln (14, 15) ein die Biegesteifigkeit des Verbindungsteils (13) erhöhender Verbindungssteg (18) vorgesehen ist.

5. Anhängerkupplung nach mindestens einem der Ansprüche 1 bis 4, **dadurch gekennzeichnet, daß** das Verbindungsteil (13) über Schraubbolzen (16) mit dem Getriebegehäuse (2) und/oder dem Anhängebock verbunden ist.

## Claims

1. Trailer hitch for a vehicle, in particular an agricultural tractor (1), comprising a gearbox case (2) at the rear, the trailer hitch having a suspension frame (3) secured to the gearbox case (2) at the rear, and the trailer hitch having a swinging drawbar (10) with a pivot pin (9), the bearing (8) of which pivot pin is secured to the gearbox case (2) on the underside, **characterized in that** the trailer hitch has an additional connecting part (13) by means of which the bearing (8) is connected to the suspension frame (3) in a non-positive and/or positive manner.

2. Trailer hitch according to Claim 1, **characterized in that** the connecting part (13) has at least two limbs (14, 15) which are positioned at an angle to one another.

3. Trailer hitch according to Claim 2, **characterized in that** one of the limbs (14) extends approximately horizontally and the other limb (15) extends approximately vertically.

4. Trailer hitch according to Claim 2 or 3, **characterized in that** between the limbs (14, 15) a connecting web (18) is provided, increasing the flexural strength of the connecting part (13).

5. Trailer hitch according to at least one of Claims 1 to 4, **characterized in that** the connecting part (13) is connected via threaded bolts (16) to the gearbox case (2) and/or to the suspension frame.

## Revendications

1. Dispositif d'attelage pour un véhicule, en particulier un tracteur agricole (1) doté d'un carter de transmission (2) situé du côté arrière, le dispositif d'attelage comprenant un support d'attelage (3) qui est fixé du côté arrière au carter de transmission (2), et le dispositif d'attelage comprenant une barre de traction (10) dotée d'un axe de pivotement (9) dont le palier (8) est fixé au carter de transmission (2) du côté inférieur, **caractérisé en ce que** le dispositif d'attelage comprend une partie de liaison (13) supplémentaire au moyen de laquelle le palier (8) est relié au support d'attelage (3) par engagement par force et/ou par coopération de formes.

2. Dispositif d'attelage selon la revendication 1, **caractérisé en ce que** la partie de liaison (13) comprend au moins deux branches (14, 15) qui sont disposées suivant un certain angle l'une par rapport à l'autre.

3. Dispositif d'attelage selon la revendication 2, **caractérisé en ce qu'**une des branches (14) s'étend approximativement horizontalement et l'autre (15) s'étend approximativement verticalement.

4. Dispositif d'attelage selon la revendication 2 ou 3, **caractérisé en ce qu'**il est prévu entre les branches (14, 15) une entretoise de liaison (18) qui augmente la rigidité à la flexion de la partie de liaison (13).

5. Dispositif d'attelage selon au moins l'une quelconque des revendications 1 à 4, **caractérisé en ce que** la partie de liaison (13) est reliée au carter de transmission (2) et/ou au support d'attelage au moyen de boulons filetés (16).
